# EUROPEAN PATENT APPLICATION

(11) **EP 2 280 337 A2**
(43) Date of publication of application: **02.02.2011**
(21) Application number: 10170197.7
(22) Date of filing: 20.07.2010
(51) Int. Cl.: G06F 3/043

(54) **Sensing a type of action used to operate a touch panel**

(30) Priority: 27.07.2009 JP 2009174396
(71) Applicant: Sony Corporation, Minato-ku Tokyo 108-0075 (JP)
(72) Inventor: Masao, Kondo, Tokyo 108-0075 (JP); Kunihito, Sawai, Tokyo 108 0075 (JP); Haruo, Oba, Tokyo 108 0075 (JP); Eijiro, Mori, Tokyo 108 -0075 (JP)
(74) Representative: Ealey, Douglas Ralph

(57) **Abstract**

Apparatus and methods relate to a touch panel and a sensor that senses a type of action used to operate the touch panel. The sensor can be a vibration sensor that senses a vibration caused by an object contacting the touch panel. The sensor can be separate from the touch panel.

## Description

The present invention relates to sensing a type of action used to operate a touch panel.

In recent years, there are many compact electronic devices and automatic transaction devices on each of which there is mounted a touch panel for a user to directly touch the display screen for manipulating the object displayed within the screen. Use of the touch panel can provide advantages such as realizing intuitive operation and enabling even a user unfamiliar with keyboard or keypad operation to easily perform operation. There are some recent electronic devices in which the display object displayed within the screen is moved or predetermined processing is performed by this movement operation, by a user operating a touch panel thereof.

A pointing device such as a mouse usually used in a generally-available information processing apparatus has two buttons, each of which is assigned a different function. A touch panel is often operated by an operation object such as a stylus and a finger, and in recent years, there is an attempt to assign different functions, such as those assigned to the two buttons of a mouse, to the operation performed by the operation object. For example, Japanese Patent Application Laid-Open No. 2004-213312 discloses a technique capable of switching between the functions which are different from each other according to the contacting area of the operation object which is in contact with the touch panel.

However, in the technique disclosed in Japanese Patent Application Laid-Open No. 2004-213312, the functions are switched according to the contacting area between the touch panel and the operation object, and therefore, there is an issue that it becomes more difficult to perform operation as the size of the touch panel becomes smaller. Moreover, when a finger is used to perform operation, there is an issue that there arises difference in the operability among individuals because the thickness of each person's fingers is different.

In light of the foregoing, it is desirable to provide an information processing apparatus and an information processing method which make it possible to easily switch between the functions regardless of the size of the touch panel.

Various respective aspects and features of the invention are defined in the appended claims. Combinations of features from the dependent claims may be combined with features of the independent claims as appropriate and not merely as explicitly set out in the claims.
Some embodiments relate to an apparatus that includes a touch panel and a sensor separate from the touch panel that senses a type of action used to operate the touch panel.

In some aspects, the sensor includes a vibration sensor.

In some aspects, the vibration sensor senses a vibration caused by an object contacting the touch panel.

In some aspects, the vibration sensor is positioned within the apparatus below the touch panel.

In some aspects, the apparatus also includes a processor that receives a signal from the sensor and determines a type of operation to perform based on the signal.

In some aspects, the signal is a first signal and the sensor is a first vibration sensor, and the apparatus also includes a second vibration sensor that produces a second signal. The processor may remove a noise component from the first signal based on the second signal.

In some aspects, the sensor is a vibration sensor, and the processor determines the type of operation to perform based on a type of vibration sensed by the vibration sensor.

In some aspects, the processor determines the type of operation to perform based on a frequency component of the signal.

In some aspects, the processor determines the type of operation to perform by performing a Fourier transform on the signal and analyzing a result of the Fourier transform.

In some aspects, the processor performs different operations based on the type of action used to operate the touch panel.

In some aspects, the processor performs a first type of operation when a first portion of an object contacts the touch panel and performs a second operation when a second portion of an object contacts the touch panel.

In some aspects, the processor performs a first type of operation when a first portion of a finger contacts the touch panel and performs a second operation when a second portion of a finger contacts the touch panel.

In some aspects, the apparatus also includes a display in a region of the touch panel.

Some embodiments relate to a method that includes sensing a type of action used to operate a touch panel, using a sensor that is separate from the touch panel.

In some aspects, the type of action used to operate the touch panel is sensed using a vibration sensor.

In some aspects, the vibration sensor senses a vibration caused by an object contacting the touch panel.

In some aspects, the method also includes determining a type of operation to perform based on the type of action sensed.

In some aspects, the type of action used to operate the touch panel is sensed using a vibration sensor, and the type of operation is determined based on a type of vibration sensed by the vibration sensor.

In some aspects, the type of operation is determined based on a frequency component of a signal produced by the vibration sensor.

In some aspects, the type of operation is determined by performing a Fourier transform on the signal and analyzing a result of the Fourier transform.

In some aspects, the method also includes performing different operations based on the type of action used to operate the touch panel.

In some aspects, a first type of operation is performed when a first portion of an object contacts the touch panel and a second operation is performed when a second portion of an object contacts the touch panel.

In some aspects, a first type of operation is performed when a first portion of a finger contacts the touch panel and a second operation is performed when a second portion of a finger contacts the touch panel.

In some aspects, the method also includes displaying an image in a region of the touch panel.

Some embodiments relate to an apparatus that includes a touch panel and a vibration sensor that senses a type of action used to operate the touch panel.

In some aspects, the vibration sensor senses a vibration caused by an object contacting the touch panel.

In some aspects, the vibration sensor is positioned within the apparatus below the touch panel.

In some aspects, the apparatus also includes a processor that receives a signal from the vibration sensor and determines a type of operation to perform based on the signal.

In some aspects, the signal is a first signal and the vibration sensor is a first vibration sensor, and the apparatus also includes a second vibration sensor that produces a second signal. The processor may remove a noise component from the first signal based on the second signal.

In some aspects, the processor determines the type of operation to perform based on a type of vibration sensed by the vibration sensor.

In some aspects, the processor determines the type of operation to perform based on a frequency component of the signal.

In some aspects, the processor determines the type of operation to perform by performing a Fourier transform on the signal and analyzing a result of the Fourier transform.

In some aspects, the processor performs different operations based on the type of action used to operate the touch panel.

In some aspects, the processor performs a first type of operation when a first portion of an object contacts the touch panel and performs a second operation when a second portion of an object contacts the touch panel.

In some aspects, the processor performs a first type of operation when a first portion of a finger contacts the touch panel and performs a second operation when a second portion of a finger contacts the touch panel.

In some aspects, the apparatus also includes a display in a region of the touch panel.

Some embodiments relate to a method that includes sensing a type of action used to operate a touch panel using a vibration sensor.

In some aspects, the vibration sensor senses a vibration caused by an object contacting the touch panel.

In some aspects, the method also includes determining a type of operation to perform based on the type of action sensed.

In some aspects, the type of operation is determined based on a type of vibration sensed by the vibration sensor.

In some aspects, the type of operation is determined based on a frequency component of a signal produced by the vibration sensor.

In some aspects, the type of operation is determined by performing a Fourier transform on the signal and analyzing a result of the Fourier transform.

In some aspects, the method also includes performing different operations based on the type of action used to operate the touch panel.

In some aspects, a first type of operation is performed when a first portion of an object contacts the touch panel and a second operation is performed when a second portion of an object contacts the touch panel.

In some aspects, a first type of operation is performed when a first portion of a finger contacts the touch panel and a second operation is performed when a second portion of a finger contacts the touch panel.

In some aspects, the method also includes displaying an image in a region of the touch panel.

As described above, according to the embodiments of the present invention, the type of the operation object is identified based on the vibration caused by operating the operation object positioned on the touch panel, and thereby, the functions can be easily switched regardless of the size of the touch panel.

Embodiments of the invention will now be described with reference to the accompanying drawings, throughout which like parts are referred to by like references, and in which:
FIG. 1 is a top view for illustrating an information processing apparatus according to a first embodiment of the present invention;
FIG. 2 is a cross sectional view taken along a section line A-A, for illustrating the information processing apparatus according to the embodiment;
FIG. 3 is an explanatory diagram for illustrating the information processing apparatus according to the embodiment;
FIG. 4 is an explanatory diagram for illustrating a hardware configuration of the information processing apparatus according to the embodiment;
FIG. 5A is an explanatory diagram for illustrating an operation object used in the information processing apparatus according to the embodiment;
FIG. 5B is an explanatory diagram for illustrating an operation object used in the information processing apparatus according to the embodiment;
FIG. 6 is a block diagram for illustrating a configuration of the information processing apparatus according to the embodiment;
FIG. 7 is an explanatory diagram for illustrating a moving direction detection unit according to the embodiment;
FIG. 8 is an explanatory diagram for illustrating a moving direction detection unit according to the embodiment;
FIG. 9 is an explanatory diagram for illustrating an operation object type identification unit according to the embodiment;
FIG. 10 is an explanatory diagram for illustrating an application control unit according to the embodiment;
FIG. 11 is an explanatory diagram for illustrating an application control unit according to the embodiment;
FIG. 12 is an explanatory diagram for illustrating an application control unit according to the embodiment;
FIG. 13 is an explanatory diagram for illustrating an application control unit according to the embodiment;
FIG. 14 is an explanatory diagram for illustrating an application control unit according to the embodiment;
FIG. 15 is an explanatory diagram for illustrating an application control unit according to the embodiment; and
FIG. 16 is a flow diagram for illustrating an information processing method according to the embodiment.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The description will be made in the following order.

### (1) First embodiment

(1-1) Regarding overall configuration of the information processing apparatus
(1-2) Regarding hardware configuration of the information processing apparatus
(1-3) Regarding configuration of the information processing apparatus
(1-4) Regarding information processing method

### (2) Summary

### (First Embodiment)

### <Regarding overall configuration of the information processing apparatus>

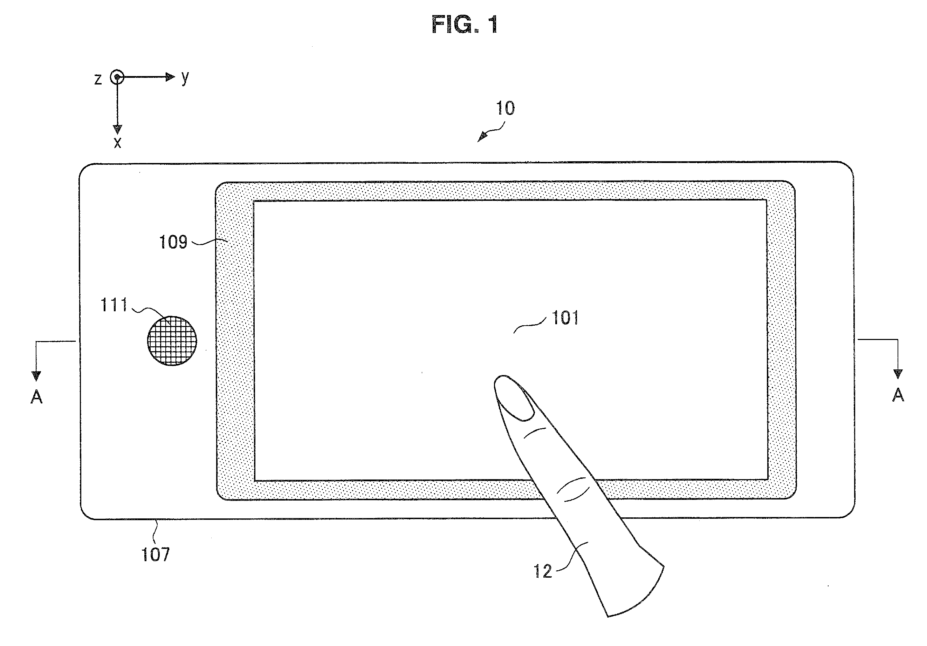

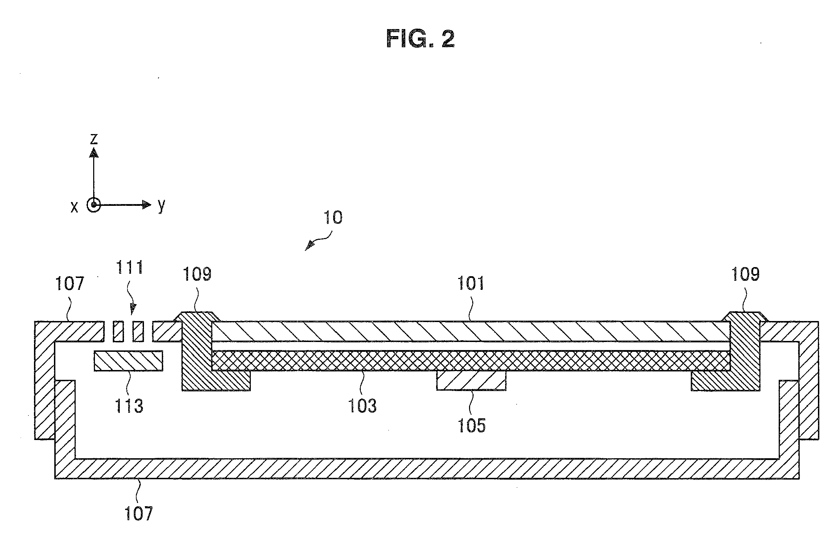

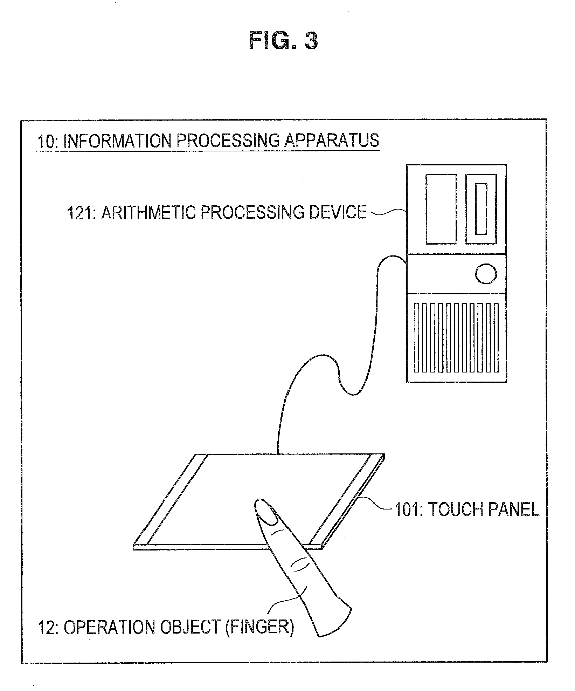

First, an overall configuration of an information processing apparatus according to the first embodiment of the present invention will be described in detail with reference to FIG. 1 to FIG. 3. FIG. 1 is a top view for illustrating the information processing apparatus according to the present embodiment. FIG. 2 is a cross sectional view of the information processing apparatus according to the present embodiment taken along a section line A-A. FIG. 3 is an explanatory diagram for illustrating the information processing apparatus according to the present embodiment.

First, the overall configuration of the information processing apparatus according to the present embodiment will be described with reference to FIG. 1 and FIG. 2.

For example, as shown in FIG. 1, the information processing apparatus 10 according to the present embodiment is provided with a touch panel 101. This touch panel 101 displays various kinds of information such as text information and image information. The diverse information displayed on the touch panel 101 is subjected to predetermined processing such as scrolling in response to touch or movement of the touch panel 101. Examples of the touch panel 101 may include a resistive-film type touch panel, a capacitance touch panel, and an optical touch panel. In addition to the above touch panels, it is possible to use as the touch panel 101 a touch panel capable of sensing the touch of the operation object 12, such as a touch panel for Acoustic Pulse Recognition method.

The information processing apparatus 10 not only performs particular processing such as selection of the object or movement of the displayed content corresponding to touch or movement of the operation object 12. For example, when the operation object 12 moves while drawing a predetermined trajectory in contact with the touch panel 101, the information processing apparatus 10 performs predetermined processing corresponding to the trajectory described by the operation object 12. That is, the information processing apparatus 10 has a gesture input function. For example, when a predetermined gesture is input, an application related with the gesture is activated, or predetermined processing related with the gesture is performed.

A user's finger is used as the operation object 12, for example. Also, a stylus or touch pen is sometimes used as the operation object 12, for example. Moreover, any object can be the operation object 12 when the touch panel 101 is an optical type.

A display panel 103 is arranged below the touch panel 101 (on the side of the negative direction of z-axis in FIG. 2), so that the user can see the content displayed on the display panel 103 through the touch panel 101. Moreover, in FIG. 2, the touch panel 101 and the display panel 103 are separately constructed, but they may be constructed in the integrated manner to have the function of the touch panel.

Further, a vibration sensor 105 is arranged on a lower section of the display panel 103. The vibration sensor 105 can detect vibration caused by operation on the touch panel 101 with the operation object 12. Here, the vibration caused by operation on the touch panel 101 with the operation object 12 may be sound caused by operation on the touch panel 101 with the operation object 12. In this case, the vibration sensor 105 may be a microphone detecting the sound caused by air vibration. Alternatively, the above vibration may be the vibration of the touch panel 101 itself, which is caused by the operation on the touch panel 101 with the operation object 12.

Here, the position at which the vibration sensor 105 is arranged is not limited to the position shown in FIG. 2. The vibration sensor 105 may be arranged in proximity to an acoustic absorbent material 109 so that the vibration sensor 105 is in contact with the touch panel 101. In a case where the touch panel 101 is a touch panel for Acoustic Pulse Recognition method, the vibration sensor previously arranged on this touch panel may be used.

Furthermore, as shown in FIG. 1 and FIG. 2, the acoustic absorbent material 109 is arranged between the touch panel 101 and a housing 107, so that vibrations (for example, sounds) caused at the location other than the touch panel 101, such as the housing 107,.are not sensed by the vibration sensor 105.

In addition, as shown in FIG. 1 and FIG. 2, a sound collection unit 111 is formed in a part of the housing 107. A microphone 113 may be arranged below the sound collection unit 111. By using the vibration collected by this microphone 113 as a vibration component representing an external noise, it becomes possible to remove a noise component from the vibration sensed by the vibration sensor 105.

Note that the configuration of the information processing apparatus 10 equipped with the touch panel 101 can be changed, for example, as shown in FIG. 3. In an example of FIG. 3, the touch panel constituting the information processing apparatus 10, and an arithmetic processing device 121 for processing position information and the like of the operation object 12 detected by the touch panel 101, are separately constructed. In a case of this configuration example, processing of data generated in accordance with the selection of the object or movement of the displayed content is performed by the arithmetic processing device 121. Thus, the configuration of the information processing apparatus 10 can be freely modified according to aspects of implementation.

Besides, the function of the information processing apparatus 10 is realized, for example, by a portable information terminal, a cell phone, a portable game machine, a portable music player, a broadcast equipment, a personal computer, a car navigation system, an intelligent home appliance, or the like.

### <Regarding hardware configuration of the information processing apparatus>

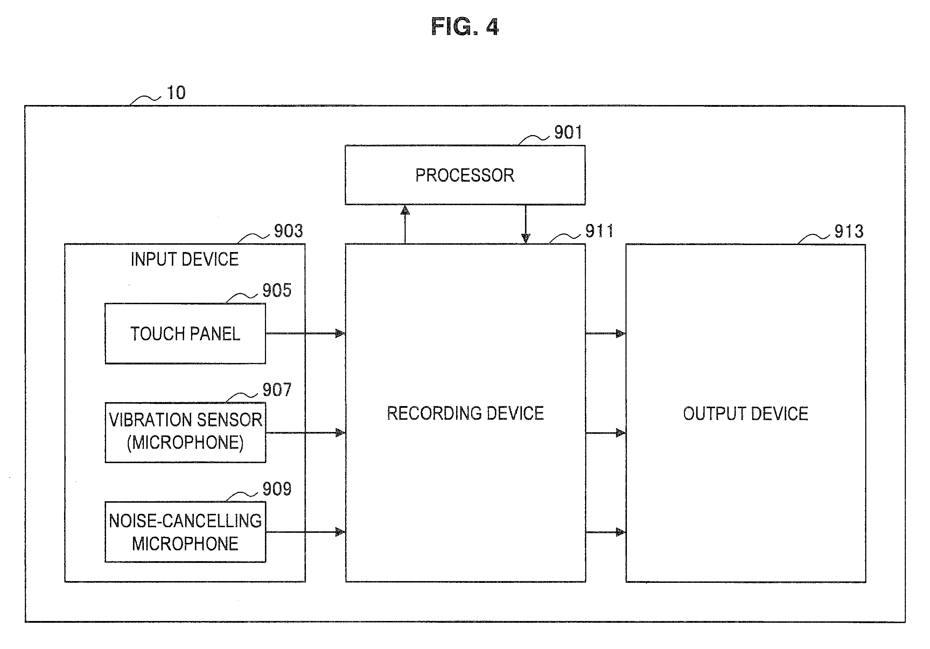

Next, a hardware configuration of the information processing apparatus according to the embodiment of the present invention will be described with reference to FIG. 4. FIG. 4 is an explanatory diagram for illustrating the hardware configuration of the information processing apparatus 10 according to the embodiment of the present invention.

As shown in FIG. 4, the information processing apparatus 10 according to the present embodiment mainly includes, for example, a processor 901, an input device 903, a recording device 911 and an output device 913.

The processor 901 is constituted by, for example, a CPU (Central Processing Unit), ROM (Read Only Memory), RAM (Random Access Memory) and the like. The CPU included in the processor 901 functions as an arithmetic processing device and a control device, and controls the entire or a part of operation within the information processing apparatus 10 according to various types of programs recorded on a ROM, a RAM, or a later described removable recording medium 911. The ROM stores therein programs, calculation parameters and the like used by the CPU. The RAM primarily stores therein programs executed by the CPU, parameters appropriately changed in its execution, and the like. These are interconnected via a host bus constituted by an internal bus such as CPU bus.

The input device 903 is an input means operated by the user such as the touch panel 905, mouse, keyboard, button, switch and lever. Moreover, the input device 903 may be a remote controlling means (so-called remote controller) using infrared rays or other radio waves, or may be an externally connected device such as cell phone or PDA adapted to operate the information processing apparatus 10, for example. Furthermore, the input device 903 further includes a microphone 907 that functions as a vibration sensor, and a noise-cancelling microphone 909. The input device 903, for example, generates an input signal based on information input using the above input means. It is possible to input various data into, or provide an operation instruction to, the information processing apparatus 10, by operating the input device 903 that outputs to the CPU.

The recording device 911 is a data storage device configured as an example of the storage unit of the information processing apparatus 10. The recording device 911 is constituted by, for example, a magnetic memory device such as HDD (Hard Disk Drive), a semiconductor memory device, an optical memory device, or a magneto-optical memory device. This recording device 911 stores therein programs executed by the CPU and various data, and various data obtained externally.

The output device 913 is constituted by, for example, a device capable of notifying the user of acquired information visually or audibly. Examples of such devices are a display unit such as CRT display device, liquid crystal display device, plasma display device, EL display device and lamps, an audio output device such as speaker and head phone, a printer device, and a cell phone. The output device 913 outputs a result obtained by various processing performed by the information processing apparatus 10, for example. Specifically, a display device displays the result obtained by various processing performed by the information processing apparatus 10 in the form of text or image. On the other hand, an audio output device converts audio signals composed of reproduced sound data, acoustic data and the like to analog signals and outputs them.

Further, in addition to the devices described above, the information processing apparatus 10 may include a drive, a connection port, a communication device, or the like.

The drive is a reader/writer for recording medium and is built in or externally attached to the information processing apparatus 10. The drive reads out information recorded in the attached removable recording medium such as magnetic disk, optical disk, magneto-optical disk, and semiconductor memory, and outputs the information to the RAM. Moreover, the drive can write record into the attached removable recording medium such as the magnetic disk, optical disk, magneto-optical disk, and semiconductor memory. The removable recording medium is, for example, a DVD media, a HD-DVD media, or Blu-ray media. Moreover, the removable recording medium may be a compact flash (registered trade mark) (Compact Flash: CF), a memory stick, or a SD memory card (Secure Digital memory card), or the like. Moreover, the removable recording medium may be an IC card (Integrated Circuit card) equipped with a noncontact IC chip, an electronic device, or the like.

The connection port is a port for connecting a device directly to the information processing apparatus 10. Examples of the connection port are a USB (Universal Serial Bus) port, an IEEE1394 port such as i.Link, a SCSI (small Computer System Interface) port. Other examples of the connection port are a RS-232C port, an optical audio terminal, HDMI (High-Definition Multimedia Interface) port, and the like. By connecting the externally connected device to this connection port, the information processing apparatus 10 obtains various data directly from the externally connected device and provides various data to the externally connected device.

The communication device is a communication interface constituted by a communication device for accessing a communication network, for example. The communication device is, for example, a communication card for wired or wireless LAN (Local Area Network), for Bluetooth (registered trademark), or for WUSB (Wireless USB). Further, the communication device may be a router for optical communication, a router for ADSL (Asymmetric Digital Subscriber Line), or a modem for each kind of communication. For example, this communication device can transmit and receive signals and the like in conformity with a predetermined protocol such as TCP/IP on the Internet and with other communication devices, for example. Moreover, the communication network accessed by the communication device include a wired or wireless network or the like, and may be the Internet, home LAN, infrared ray communication, radio wave communication or satellite communication, for example.

An example of the hardware configuration which can realize the function of the information processing apparatus 10 according to embodiments of the present invention has been described above. The each structural element described above may be constructed by using a general-purpose member or may be constructed by hardware specialized for the function of each structural element. Accordingly, the hardware configuration to be utilized can be changed appropriately according to a technical level at the time of carrying out present embodiment.

### <Regarding configuration of the information processing apparatus>

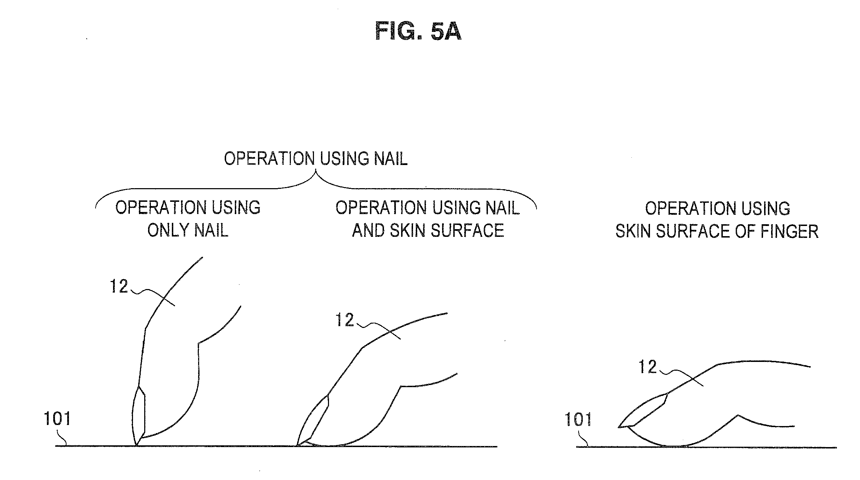

Next, a configuration of the information processing apparatus according to the present embodiment will be described in detail with reference to FIG. 5A to FIG. 14.

### [Types of operation objects]

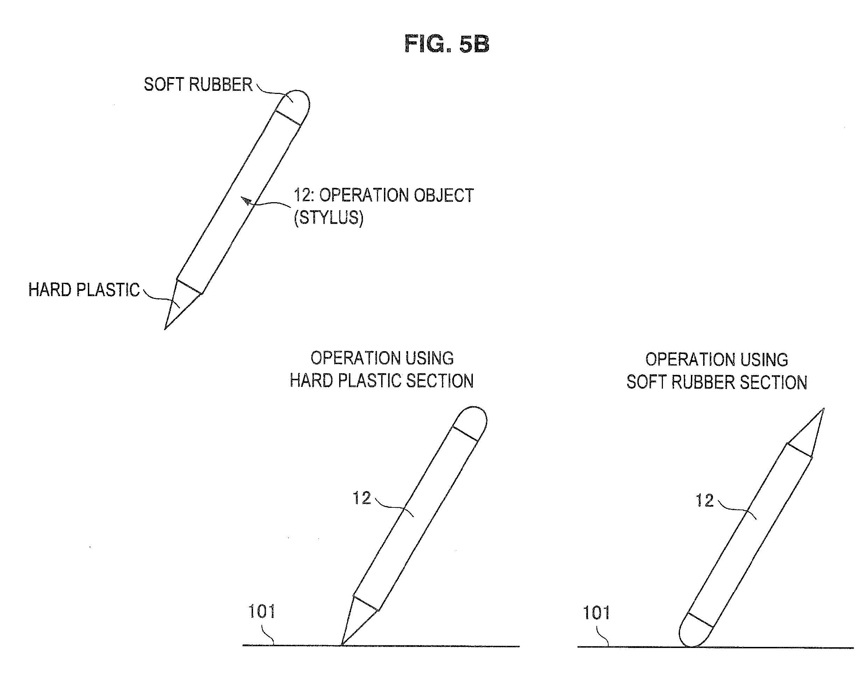

First, the types of operation objects used for operating the information processing apparatus 10 according to the present embodiment will be described with reference to FIG. 5A and FIG. 5B. FIG. 5A and FIG. 5B are explanatory diagrams for illustrating the operation object used in the information processing apparatus according to the present embodiment.

As described below in detail, the information processing apparatus 10 classifies the operation objects into two types based on vibrational information about vibration caused by operating the operation object on the touch panel, and identifies which of two types the operation object used to operate the touch panel belongs to,. Here, the type of operation object identified by the information processing apparatus 10 is the type related with hardness or softness of the operation object such as, for example, an operation object having a relatively hard section or an operation object having a relatively soft section.

For example, as shown in FIG. 5A, when the operation object 12 is a finger of a user, the finger of the user includes a nail section corresponding to the relatively hard section and a skin surface section corresponding to the relatively soft section. As shown in FIG. 5A, operation on the information processing apparatus 10 according to the present embodiment is classified into, for example, a case where the nail section is used as the operation object 12 and a case where the skin surface of the finger is used as the operation object 12. Here, as shown in FIG. 5A, the operation using the nail section includes not only the operation using only the nail but also the operation using both of the nail and the skin surface of the finger. The information processing apparatus 10 according to the present embodiment identifies the operation using the nail as the operation using the relatively hard section, and identifies the operation using the skin surface of the finger as the operation using the relatively soft section.

Further, a stylus as shown in FIG. 5B can be used as the operation object 12. The stylus as shown in FIG. 5B includes a section made of rigid plastic and a section made of soft rubber. The information processing apparatus 10 according to the present embodiment identifies the operation using the rigid plastic section as the operation using the relatively hard section, and identifies the operation using the soft rubber section as the operation using the relatively soft section.

Besides, the operation object 12 that can be used in the information processing apparatus 10 according to the present embodiment is not limited to the examples shown in FIG. 5A and FIG. 5, and anything can be used as the operation object 12 as long as it is made of a material causing different vibrations when operation is performed on the touch panel. Alternatively, the operation object 12 may not be equipped with both of the relatively hard section and the relatively soft section, and it is also possible to use two types of operation objects 12, i.e., an operation object 12 including the hard section and an operation object 12 including the soft section as the situation demands.

The user may select different operations to be performed by the information processing apparatus 10 by performing different types of actions when operating the touch panel. For example, the user may perform a first type of action that includes touching the touch panel with a soft object, or a second type of action that includes touching the touch panel with a hard object. A sensor may sense the type of action used to operate the touch panel, and different operations may be performed by a processor depending on the type of action sensed. Thus, apart from the information provided by operating the touch panel at particular location, the type of action used to operate the touch panel may provide additional information to the information processing apparatus 10 that enables a user to select the type of operation to be performed.

In the following, explanation will be made, taking the case where a finger of a user is used as the operating tool 12 for example.

### [Regarding configuration of the information processing apparatus]

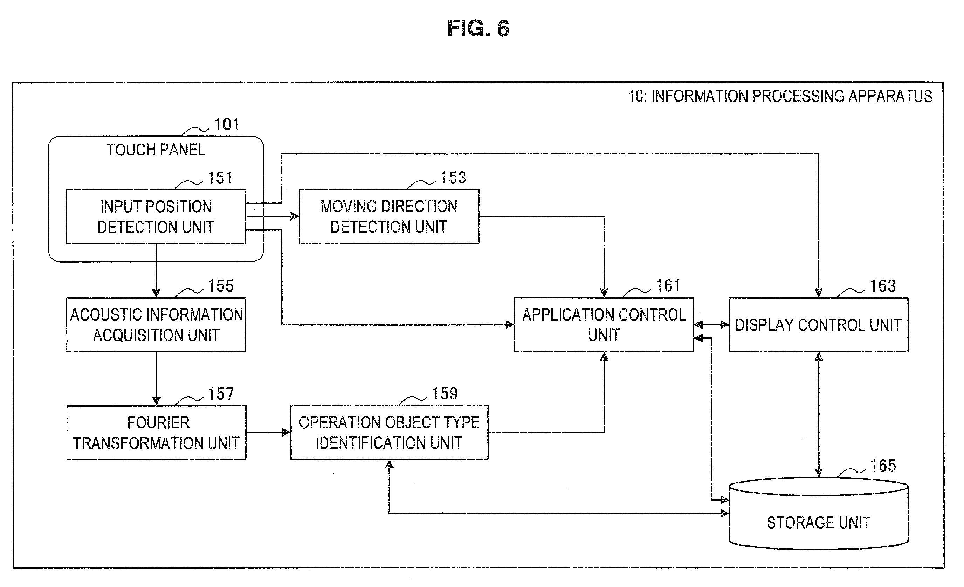

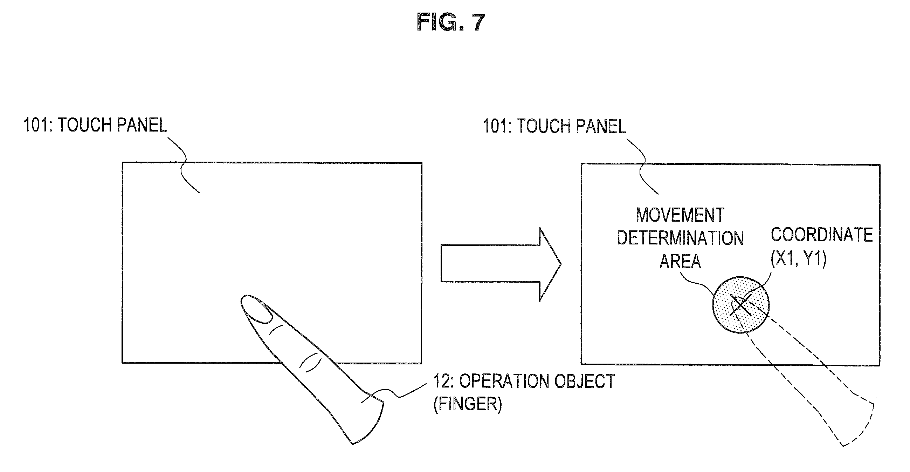

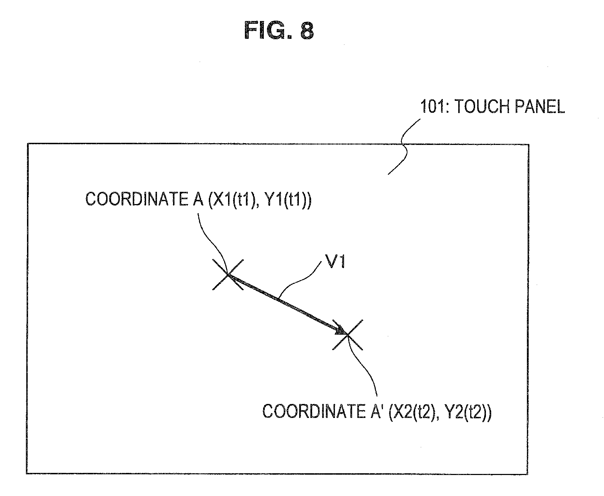

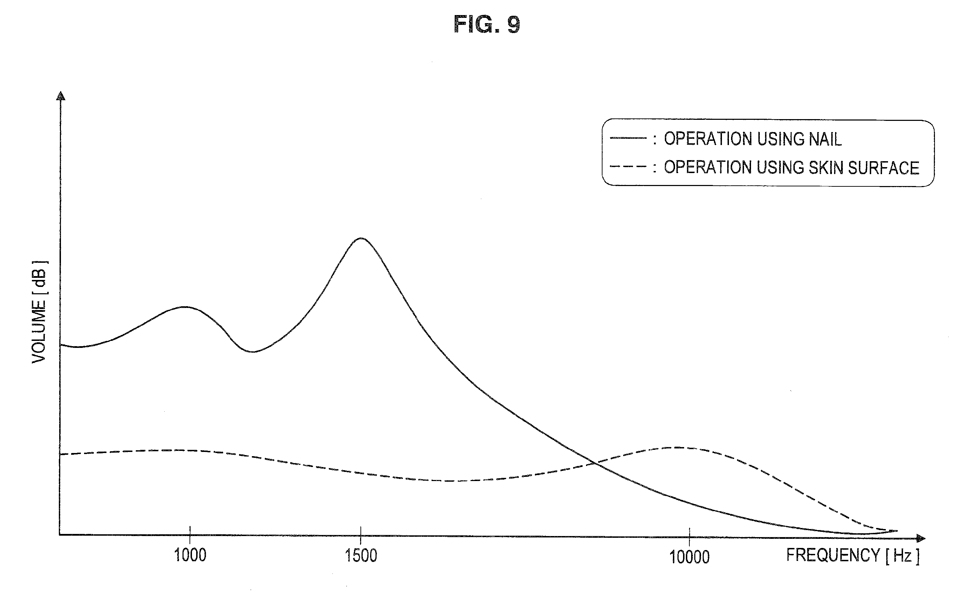

Next, a configuration of the information processing apparatus according to the present embodiment will be described in detail with reference to FIG. 6 to FIG. 9. FIG. 6 is a block diagram for illustrating the configuration of the information processing apparatus according to the present embodiment. FIG. 7 and FIG. 8 are explanatory diagrams for illustrating a moving direction detection unit according to the present embodiment. FIG. 9 is an explanatory diagram for illustrating an operation object type identification unit according to the present embodiment.

In the below explanation, as an example of vibrational information, the vibrational information is assumed to be information about sound caused by air vibration due to operation with the operation object 12 (hereinafter referred to as "acoustic information").

For example, as shown in FIG. 6, the information processing apparatus 10 mainly includes an input position detection unit 151, the moving direction detection unit 153, an acoustic information acquisition unit 155, a Fourier transformation unit 157, the operation object type identification unit 159, an application control unit 161, a display control unit 163, and a storage unit 165.

The input position detection unit 151 detects the position on the touch panel 101 in contact with the operation object 12. The input position detection unit 151 may be configured to detect a pressing force exerted on the touch panel 101 when the operation object 12 is in contact with the touch panel 101. Alternatively, even when the operation object 12 is not in direct contact with the touch panel 101, the input position detection unit 151 may be adapted to detect the operation object 12 present in proximity to the touch panel 101 in a space above the touch panel 101 so as to recognize the detected position as a contacting position. In other words, the contacting position, as referred to herein, may include position information about operation performed by the operation object 12 in such a manner as to cut the air above the screen of the touch panel 101.

The input position detection unit 151 transmits, as input position information, information about the detected contacting position (more specifically, the coordinate of the contacting position) to the moving direction detection unit 153, the application control unit 161, and the display control unit 163. For example, when only one contacting position is detected, the input position detection unit 151 outputs one coordinate (X1, Y1) as input position information. When the touch panel 101 is capable of simultaneously detecting a plurality of touches, the input position detection unit 151 may output a plurality of coordinates according to the number of detected contacting positions.

Further, when the input position detection unit 151 detects touch of the operation object 12, the input position detection unit 151 transmits information indicating that the operation object 12 is in contact with the touch panel 101 to the later-described acoustic information acquisition unit 155. The transmission of the above information to the acoustic information acquisition unit 155 enables the acoustic information acquisition unit 155 to start obtaining the acoustic information used for identifying the type of the operation object 12.

The moving direction detection unit 153 is constituted by, for example, a CPU, a ROM, a RAM, and the like. The moving direction detection unit 153 uses the coordinate value, i.e., the input position information transferred from the input position detection unit 151, to detect a direction to which the operation object 12 moves.

More specifically, the moving direction detection unit 153 detects the moving direction of the operation object 12 based on the variation of the input position information that is transferred at every predetermined time interval (e.g., at every several milliseconds to several hundred milliseconds). As indicated in FIG.7, for example, there is set in the moving direction detection unit 153 a movement determination area utilized for determining whether the operation object 12 moves or not. This movement determination area can be set to be any size, according to performance such as resolution capable of distinguishing the adjacent two contacting positions on the touch panel 101. For example, the movement determination area may have a radius of approximately ten pixels. The moving direction detection unit 153 determines that the operation object 12 has moved when the transmitted input position information changes beyond the range of this movement determination area. Moreover, when the transmitted input position information changes within the range of this moving determination area, the moving direction detection unit 153 may determine that so-called tapping operation has been performed by the operation object 12. Determination whether the operation object 12 has been moved is performed on all pieces of the input position information transmitted at the same timing. Namely, when two coordinate values are transmitted as the input position information at the same timing, the moving direction detection unit 153 performs the abovementioned determination regarding the time variation of each of the two coordinate values.

In addition, when the transmitted input position information changes beyond the range of the movement determination area, the moving direction detection unit 153 detects, as the moving direction, the direction of vector generated by a trajectory drawn by the transmitted input position information along with time variation. Moreover, the size of the abovementioned vector represents the moving distance of the operation object 12.

For example, as shown in FIG. 8, a case will be considered where the input position detection unit 151 transfers input position information about a coordinate A (X1(t1), Y1(t1)) at a time t1, and a position at a time t2 related to this input position information has a coordinate A' (X2(t2), Y2(t2)). In this case, the moving direction detection unit 153 detects a direction represented by a vector V1 between the start coordinate A and the end coordinate A' as the moving direction of the operation object 12 in contact with the coordinate A. Further, the moving direction detection unit 153 obtains the size of the vector V1 as the moving distance of the operation object 12.

Further, the moving direction detection unit 153 can calculate a moving speed, an acceleration, and the like of the operation object 12 on the basis of the detected moving distance and the detected moving time of the operation object 12. The moving direction detection unit 153 can determine whether operation performed with the operation object 12 is a so-called drag operation or a so-called flick operation on the basis of the moving distance, the moving speed, the acceleration, and the like. The drag operation means dragging the operation object 12 on the touch panel 101, in which the operation object 12 is considered to move at a substantially constant moving speed. The flick operation means flicking the touch panel 101, in which the operation object 12 is considered to move at a fast moving speed (or a large acceleration) in a short time.

The moving direction detection unit 153 transmits, to the later-described application control unit 161, direction information including the moving distance and the moving direction of the operation object 12 detected as described above. In addition, the moving direction detection unit 153 transmits, to the application control unit 161, determination result indicating whether operation performed with the operation object 12 is drag operation or flick operation. Besides, the moving direction detection unit 153 may transmit, to the later-described operation object type identification unit 159, information such as a moving distance, a moving speed, an acceleration of the operation object.

An example of vibrational information acquisition unit, i.e., the acoustic information acquisition unit 155, is realized with, for example, a CPU, a ROM, and a RAM. When the acoustic information acquisition unit 155 receives from the input position detection unit 151 the information indicating that the operation object 12 is in contact with the touch panel 101, the acoustic information acquisition unit 155 activates the vibration sensor (microphone) to start obtaining the vibrational information (acoustic information). The acoustic information acquisition unit 155 obtains the acoustic information transmitted from the vibration sensor (microphone) 105, converts the obtained acoustic information into digital data, and transmits the digital data to the later-described Fourier transformation unit 157. Alternatively, the acoustic information acquisition unit 155 may temporarily store the obtained acoustic information in the later-described storage unit 165.

Thanks to assuming the touch of the operation object 12 as a trigger for starting acquisition of the acoustic information, the acoustic information acquisition unit 155 does not have to be always in a stand-by state. And thereby, the standby power consumption of the information processing apparatus 10 can be reduced. Moreover, the capacity of the buffer for storing the obtained acoustic information can be reduced because the acoustic information acquisition unit 155 does not constantly obtain the acoustic information.

When the information processing apparatus 10 is equipped with the noise-cancelling microphone 113, the information processing apparatus 10 may obtain acoustic information related to noise from the noise-cancelling microphone 113, convert the acoustic information into digital data, and use the digital data for noise removal of the acoustic information. The S/N ratio (Signal to Noise ratio) of the acoustic information obtained from the vibration sensor 105 can be improved by using the acoustic information obtained from the noise-cancelling microphone 113 as acoustic information related to noise. As a result, the later-described operation object type identification unit 159 can identify more accurately the type of the operation object.

The Fourier transformation unit 157 is realized with, for example, a CPU, a ROM, and a RAM. The Fourier transformation unit 157 performs Fourier transformation on data corresponding to the acoustic information transmitted from the acoustic information acquisition unit 155, and generates acoustic information in a frequency domain. The Fourier transformation unit 157 transmits the generated acoustic information in the frequency domain to the later-described operation object type identification unit 159.

The operation object type identification unit 159 is realized with, for example, a CPU, a ROM, and a RAM. The operation object type identification unit 159 classifies the operation object 12 into two types based on the obtained vibrational information, and identifies which type of operation object the operation object 12 used to operate the touch panel 101 belongs to. More specifically, the operation object type identification unit 159 classifies the operation performed on the touch panel 101 with the operation object 12 into either operation using the relatively hard section of the operation object 12 or operation using the relatively soft section of the operation object 12. Thereupon, the operation object type identification unit 159 identifies which of the relatively hard section and the relatively soft section of the operation object 12 used to operate the touch panel 101 corresponds to.

For example, the operation object type identification unit 159 according to the present embodiment identifies the type of the operation object 12 based on the acoustic information obtained by the acoustic information acquisition unit 155 (more specifically, the acoustic information on which Fourier transformation was further performed by the Fourier transformation unit 157).

Here, FIG. 9 shows a characteristic waveform (a waveform in a frequency domain) of a sound caused by operation using a nail and a sound caused by operation using a skin surface. In a graph of FIG. 9, a horizontal axis denotes the frequency [Hz], and a vertical axis denotes the volume [dB], which is the amount related to the magnitude of vibration. The waveforms of the sounds caused by respective operations may change according to the material of the touch panel 101, the position in which the vibration sensor 105 is installed, and the like. However, as is evident from FIG. 9, the operation using the nail and the operation using the skin surface cause different waveforms of sounds. It is found that the waveform of the sound caused by the operation using the nail, i.e., the relatively hard section, has characteristic peaks at around 1000 Hz and 1500 Hz, and includes a smaller frequency component at around 10000 Hz than at around 1000 to 1500 Hz. In contrast, the waveform of the sound caused by the operation using the skin surface, i.e., the relatively soft section, has an overall broad shape, and is flat at around 1000 to 1500 Hz and a characteristic peak at around 10000 Hz. Therefore, by making use of the difference between these waveforms, the type of the operation object can be identified based on the obtained acoustic information.

Accordingly, the operation object type identification unit 159 according to the present embodiment identifies the two types of operation objects (the relatively hard one and the relatively soft one) as follows by using the volume representing the magnitude of vibration and the peak frequency of the waveform representing the sound.

That is, the operation object type identification unit 159 determines whether the overall volume of the acoustic information in the frequency domain transmitted from the Fourier transformation unit 157 is equal to or more than a predetermined threshold value (which will be hereinafter referred to as threshold value A) [dB]. Here, the overall volume of the waveform of the sound is represented as area of a region enclosed by the waveform of the sound, the vertical axis, and the horizontal axis. Subsequently, the operation object type identification unit 159 determines whether both of the following two relationships are satisfied or not with respect to the predetermined two kinds of threshold values (which will be hereinafter referred to as threshold value B and threshold value C).

(Volume at 1500 Hz/Vblume at 10000 Hz) > Threshold value B ... (Formula 101)
(Volume at 1000 Hz/Volume at 10000 Hz) > Threshold value C ... (Formula 102)

In a case where the overall volume is determined to be equal to or more than the threshold value A and where both of the above formula 101 and the above formula 102 are satisfied, the operation object type identification unit 159 identifies the operation on the touch panel as operation using the relatively hard section of the operation object 12 (in the example of FIG. 9, the operation using nail). In a case where the overall volume is less than the threshold value A or any one of the above formula 101 and the above formula 102 is not satisfied, the operation object type identification unit 159 identifies the operation on the touch panel as operation using the relatively soft section of the operation object 12 (in the example of FIG. 9, the operation using skin surface).

Here, the overall volume and the volume in each peak frequency may be an instantaneous value at a certain time, or may be an average value in a predetermined period of time (for example, an average value in 300 msec). However, by using an average value in a predetermined period of time, it becomes possible to use a value from which variation due to noise is removed to a certain extent, which enables the operation object type identification unit 159 to make a more correct determination.

Further, the threshold value A to the threshold value C may be values previously obtained by performing statistical processing on actually-obtained multiple measurement values. Alternatively, the threshold value A to the threshold value C may be determined based on acoustic information and the like that are registered when the user of the information processing apparatus 10 uses the information processing apparatus 10 for the first time.

In the above explanation, the type of the operation object 12 is identified based on the three peak frequencies, i.e., 1000 Hz, 1500 Hz, and 10000 Hz. However, the number of peak frequencies to be used is not limited to the number as described above. As long as there are valid peaks to distinguish two kinds of waveforms of sounds, it is possible to identify the operation object by using any number of peak frequencies.

The peak frequency may change according to, e.g., an operation speed of the operation object 12. For this reason, a database describing relationship between operation speeds of the operation object and characteristic peak frequencies may be prepared in advance, and the peak frequency used for identifying the type of the operation object 12 may be determined based on the operation speed of the operation object transmitted from the moving direction detection unit 153. Thus, particular processing of the operation object suitable for each user may be performed by identifying the type of the operation object based on the magnitude of vibration, the peak frequency, and the operation speed of the operation object.

In the above explanation, the type of the operation object 12 is identified by using the overall volume and the volume at the peak frequency. Alternatively, the type of the operation object may be identified based on the overall volume of sounds caused by operations. In such case, the number of conditions to be considered in identification of the type can be reduced. Thereby, the type of the operation object can be identified at a faster speed.

As described above, the type of the operation object may be identified using the overall volume and the volumes at each peak frequency. Alternatively, the type of the operation object 12 may be identified according to the following method.

For example, in a case where there is a peak frequency that is supposed to be in one type but not in the other type, the obtained acoustic information may be passed through a low pass filter or a band pass filter, and the type of the operation object may be identified based on whether there is a peak frequency as described above or not.

Alternatively, as shown in FIG. 9, waveforms of sounds are different according to the type of operation object. Accordingly, the degree of similarity between the obtained acoustic information and the waveform of sound which is characteristic of each type of operation object may be calculated (for example, a cross-correlation value and a summation of differences), and the type of the operation object may be identified depending on which waveform the waveform of the obtained acoustic information is similar to.

The operation object type identification unit 159 transmits, to the later-described application control unit 161, the thus determined identification result about the type of the operation object 12. Further, the operation object type identification unit 159 may record the obtained identification result as history information in the later-described storage unit 165.

The application control unit 161 is realized with, for example, a CPU, a ROM, and a RAM. The application control unit 161 controls operation of an application providing predetermined service according to the type of the operation object 12 identified by the operation object type identification unit 159. More specifically, the application control unit 161 controls the application based on the position information transmitted from the input position detection unit 151, the information about the moving direction and the like transmitted from the moving direction detection unit 153, and the operation object type information transmitted from the operation object type identification unit 159.

Here, the application control unit 161 may determine, in real time, the type of the operation object based on the operation object type information transmitted from the operation object type identification unit 159, and may use the type of the operation object for controlling the application. In this case, when the type of the operation object 12 changes while touch panel 101 is operated with the operation object 12, the application control unit 161 controls the application according to change of the type of the operation object 12. Now, the following case will be considered: the touch panel is operated with a nail at the start of the operation, and while the operation object (i.e., a finger of a user) moves, the operation is switched to operation using the skin surface of the finger. In this case, during the series of operations using the operation object 12, the application control unit 161 controls the application so that the function based on the operation using the nail is switched to the function based on the operation using the skin surface.

Alternatively, after the detection of touch of the operation object 12, the application control unit 161 may determine, at any time interval, the type of the operation object based on the transmitted operation object type information, and may use the type of the operation object for controlling the application. In this case, once the operation on the touch panel 101 using the operation object 12 is started and the type of the operation object 12 is identified, the application control unit 161 controls the application with the identified type of the operation object 12 being fixed until the operation using the operation object 12 is finished. Now, the following case will be considered: the touch panel is operated with a nail at the start of the operation, and while the operation object (i.e., a finger of a user) moves, the operation is switched to operation using the skin surface of the finger. In this case, until the series of operations using the operation object 12 is finished, the application control unit 161 controls the application while assuming that the operation is performed using the nail.

This application control unit 161 will be hereinafter described in detail using specific examples.

The display control unit 163 is realized with, for example, a CPU, a ROM, a RAM, and the like. The display control unit 163 is a control means that controls contents to be displayed on the touch panel 101. For example, the display control unit 163 reads out object data, such as thumb nail images of arbitrary image data recorded in the storage unit 165 described later, and displays the object data on the touch panel 101. At this time, the display control unit 163 specifies a display position of an object to the touch panel 101, and causes the touch panel 101 to display the object data at the specified display position. For this purpose, the display control unit 163 holds information indicating the display position of an object to be displayed on the touch panel 101. The information indicating the display position of the object is transmitted from the display control unit 163 to the application control unit 161 or the like.

The display control unit 163 receives input position information from the input position detection unit 151. For example, when the operation object 12 in contact with the touch panel 101 moves, the display control unit 163 receives the input position information from the input position detection unit 151 in real time. The display control unit 163 obtains the object, such as thumb nails of the contents included in the information processing apparatus 10 from the later-described storage unit 165 and the like, and displays the object on the display screen. Further, when the displayed object is determined to be selected, the display control unit 163 can change the display so as to emphasize the selected object. For example, the display control unit 163 can perform a control so as to increase the brightness of the selected object and decrease the brightness of the non-selected object.

Moreover, the storage unit 165 stores therein object data to be displayed on the touch panel 101. The object data referred here includes, for example, any of parts constituting graphical user interface (hereinafter referred to as GUI), such as icons, buttons, thumbnails, and the like. Moreover, attribute information for each object data is stored in the storage unit 165. The attribute information includes, for example, a created date and time of object data or data entity related with object data, an updated date and time, a name of updater, a type of data entity, size of data entity, a level of importance, a priority and the like.

The storage unit 164 also stores entity data corresponding to object data in such a manner that the entity data and the object data are associated with each other. The entity data referred to herein means data related to a predetermined processing executed when an object displayed on the touch panel 101 is operated. For example, the object data corresponding to a moving picture content is associated with the content data of the moving picture content as entity data. The storage unit 165 also stores a reproduction application for reproducing the content in association with the object data, the content data, or the attribute information.

The object data stored in the storage unit 165 is read out by the display control unit 163, and is displayed on the touch panel 101.

Further, in addition to these data, the storage unit 165 may store various parameters or progress of processing that are necessary to be stored while the information processing apparatus 10 performs certain processing, or various kinds of databases and the like as necessary. This storage unit 165 can be freely read and written by each processing unit of the information processing apparatus 10.

### [Regarding Examples of controls of applications]

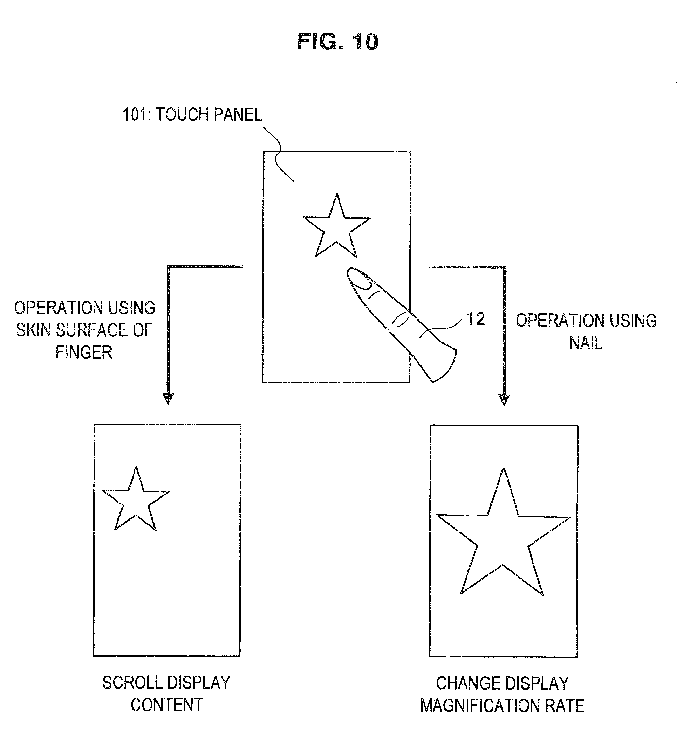

Next, examples of controls of applications performed by the application control unit according to the present embodiment will be described in detail with reference to FIG. 10 to FIG. 15. FIG. 10 to FIG. 15 are explanatory diagrams for illustrating the application control unit according to the present embodiment.

FIG. 10 illustrates an example of switching between scrolling of a display screen and change of a display magnification rate according to the type of the operation object 12. In other words, when the operation object type identification unit 159 transmits a notification indicating that operation is performed with a skin surface of a finger, the application control unit 161 scrolls the display content displayed on the touch panel based on the moving direction of the finger. Further, when the operation object type identification unit 159 transmits a notification indicating that operation is performed with a nail, the application control unit 161 changes the display magnification rate (i.e., enlarges/reduces the display content) according to the amount of shift between the center of the display screen and the operation object.

Such switching of the functions is useful when the application controlled by the application control unit 161 is a word processor, a Web browser, a mailer, and an information display application such as a map display application.

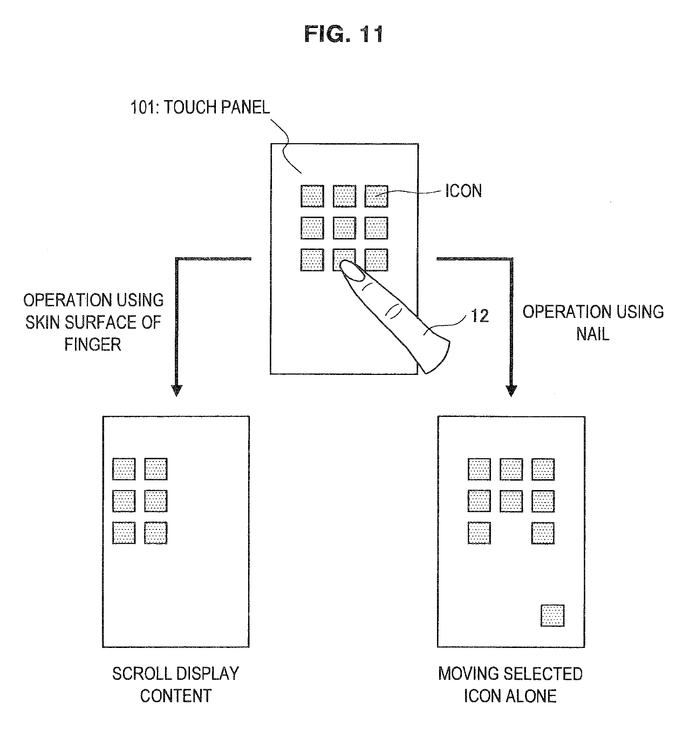

In the example shown in FIG. 11, multiple icons are displayed on the touch panel 101, and switching is made between scrolling of displayed content and moving of only a selected icon according to the type of the operation object. That is, when operation is performed using a skin surface of a finger, the application control unit 161 scrolls the display content while maintaining the positional relationship of the icons. When operation is performed using a nail, the application control unit 161 moves the selected icon along the trajectory drawn by the finger.

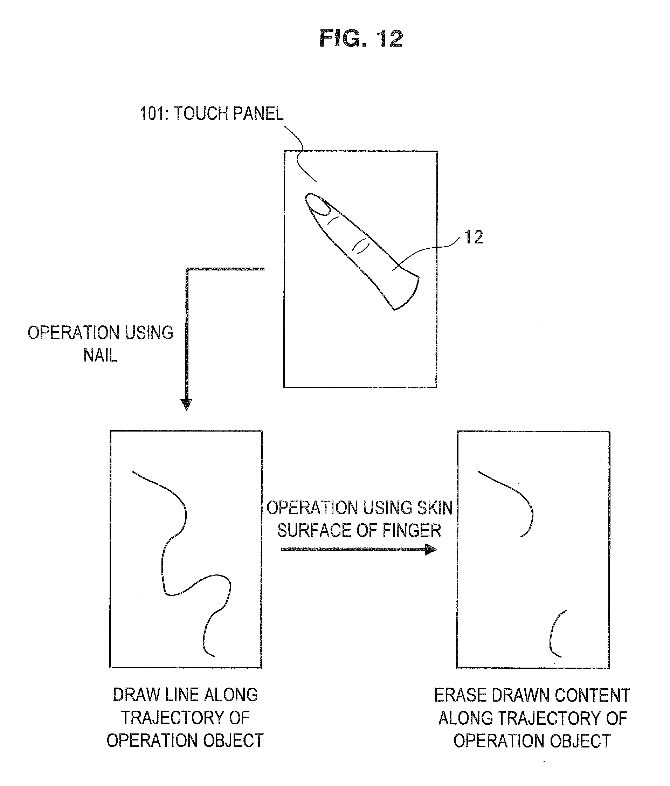

In the example shown in FIG. 12, a so-called pencil function and a so-called eraser function are switched according to the type of the operation object. That is, when operation is performed using a nail, the application control unit 161 draws a line having a predetermined width along the trajectory drawn by the finger. When operation is performed using a skin surface of a finger, the application control unit 161 erases the drawn content along the trajectory of the finger.

In the past, the user uses the operation object to select, e.g., an icon representing a function of a pencil, and performs a predetermined drawing operation. When the drawn content is to be erased, the user switches the function by selecting, e.g., an icon representing a function of an eraser, and performs a desired operation. However, in the present embodiment, the user can easily switch the function by changing the section of the operation object used for operation.

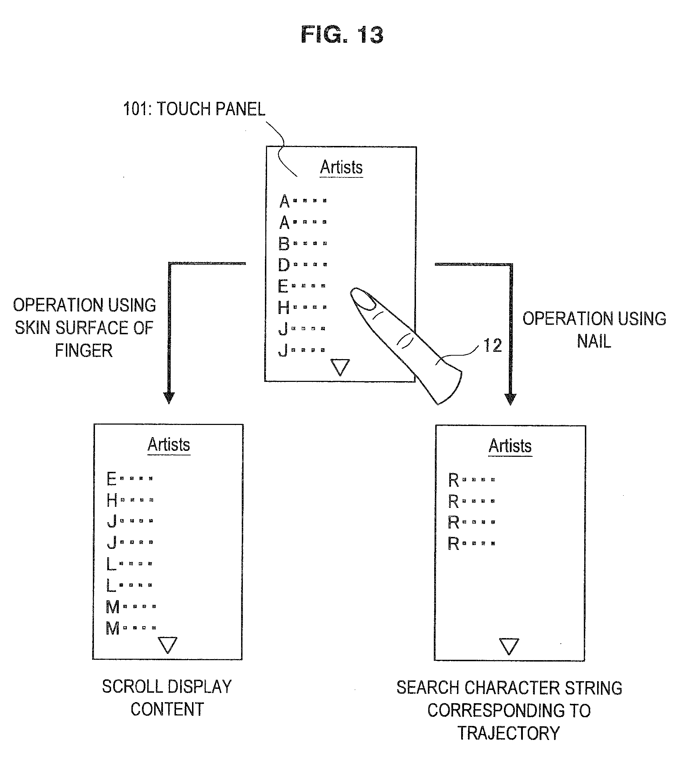

in the example shown in FIG. 13, the scroll function of display content and the search function of display content are switched according to the type of the operation object. That is, when operation is performed using a skin surface of a finger, the application control unit 161 scrolls display content according to the moving direction of the finger. When operation is performed using a nail, the application control unit 161 searches a character string corresponding to the trajectory drawn by the finger. Also in this case, the user can execute desired processing without selecting any predetermined icon to switch the function, and thereby, the convenience of the user can be improved.

Such switching of the functions is useful in inputting a mail address during writing an e-mail or in selecting a music list and the like in a music reproduction application.

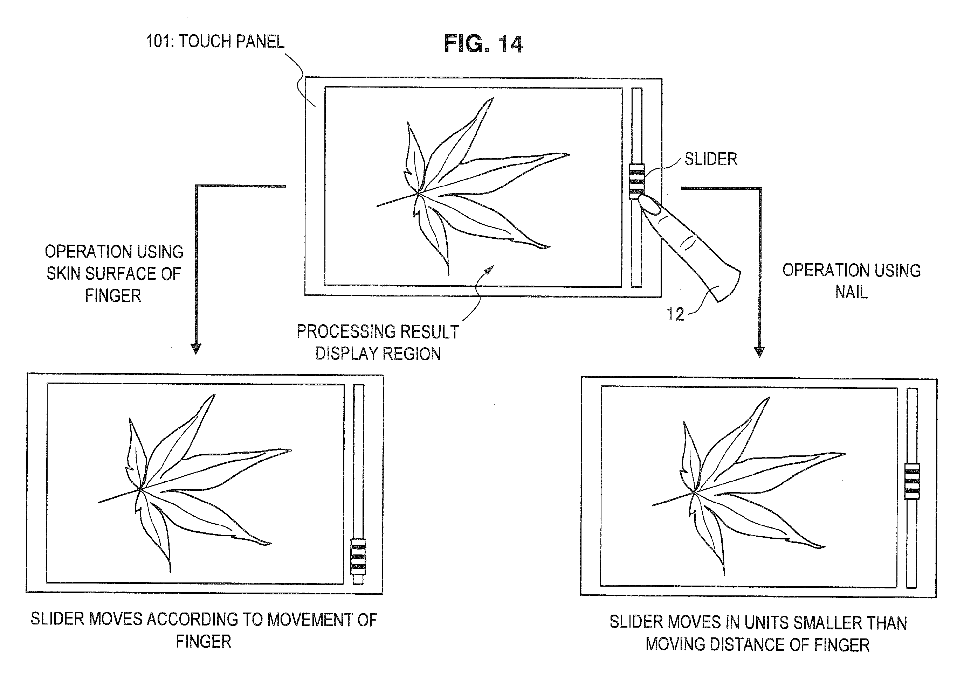

In the example shown in FIG. 14, an image processing application performs image processing according to a selected parameter value, and the degree of variation of the parameter is changed according to the type of the operation object. For example, when a color temperature is set in the image processing application, a user is required to decide a parameter value, depending on the type of image processing. In this case, as shown in FIG. 14, a processing result display region may be arranged in the touch panel 101, so that the user may set parameters while checking which processing effect is obtained from the set parameter value. When a slider for changing the parameter is operated by a skin surface of a finger, the application control unit 161 can move the slider according to the movement of the finger. Further, when the slider is operated by a nail, the application control unit 161 can move the slider in units smaller than the moving distance of the finger, so that the user can easily fne-adjust the parameter.

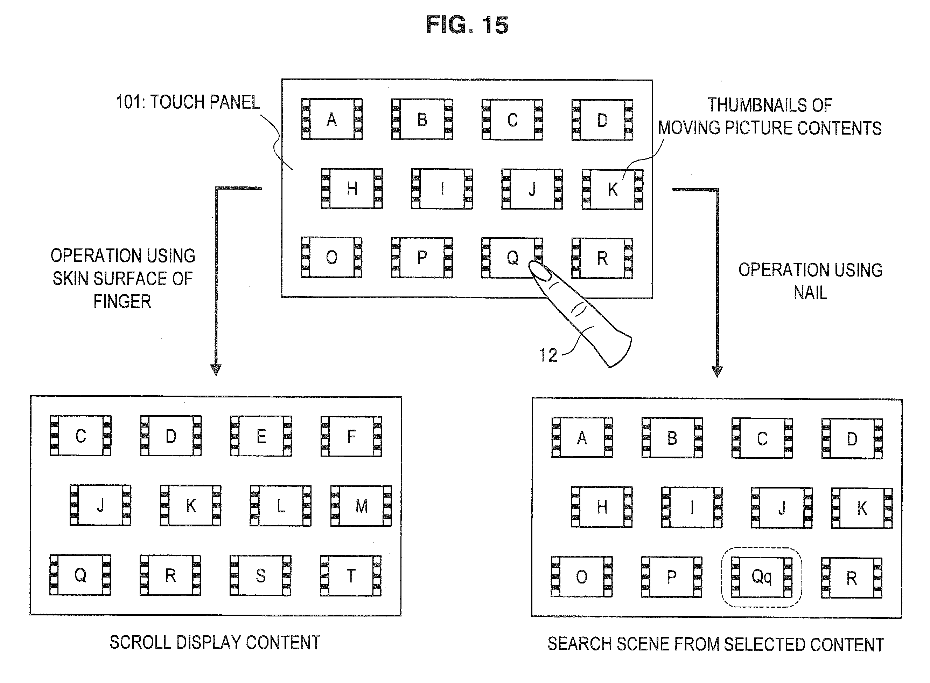

In the example shown in FIG. 15, the touch panel 101 displays multiple thumbnails of the moving picture contents, and the scroll function of display content and a scene-search function for searching within moving picture file are switched according to the type of the operation object. That is, when operation is performed using a skin surface of a finger, the application control unit 161 scrolls the display content along the moving direction of the finger. When operation is performed using a nail, the application control unit 161 performs a scene-search for the selected moving picture content. Also in this case, the user can execute desired processing without selecting any predetermined icon to switch the function, and thereby, the convenience of the user can be improved.

The examples of controls of applications have been described hereinabove using the specific examples. However, the switching of the functions of applications according to the type of the operation object is not limited to the above-described examples. The switching operation according to the present embodiment can be applied to switching of various other functions.

As described above, the information processing apparatus 10 according to the present embodiment can identify the type of the operation object 12 based on the sound caused by the operation on the touch panel, and controls the application according to the identification result of the type of the operation object 12. Accordingly, the user of the information processing apparatus 10 has only to care which section of the operation object is used for performing operation, and can easily switch the function regardless of the size of the touch panel without caring about detailed issues such as the contacting area with the touch panel.

In the above explanation, the acoustic information which was obtained by the acoustic information acquisition unit 155 and subjected to Fourier transformation by the Fourier transformation unit 157 is used to identify the type of the operation object 12. However, the method for identifying the type is not limited to the above-described examples. For example, the acoustic information obtained by the acoustic information acquisition unit 155 may be used to identify the type of the operation object 12 without subjecting the acoustic information to Fourier transformation.

The examples of the functions of the information processing apparatus 10 according to the present embodiment have been described hereinabove. The each structural element described above may be constructed by a generally-used member and circuit, or may be constructed by hardware specialized for the purpose of each structural element. Alternatively, all of the functions of the structural elements may be performed by a CPU and the like. Accordingly, the configuration to be utilized may be changed appropriately according to the technical level at the time of carrying out the present embodiment.

Besides, it is possible to produce a computer program for realizing the functions of the above-described information processing apparatus according to the present embodiment, and the computer program can be implemented in a personal computer and the like. Further, a computer-readable recording medium storing such computer program can be provided. Examples of the recording medium include a magnetic disk, an optical disk, a magneto-optical disk, and a flash memory. Further, the above computer program may be distributed via networks, for example, without using the recording medium.

### <Regarding information processing method>

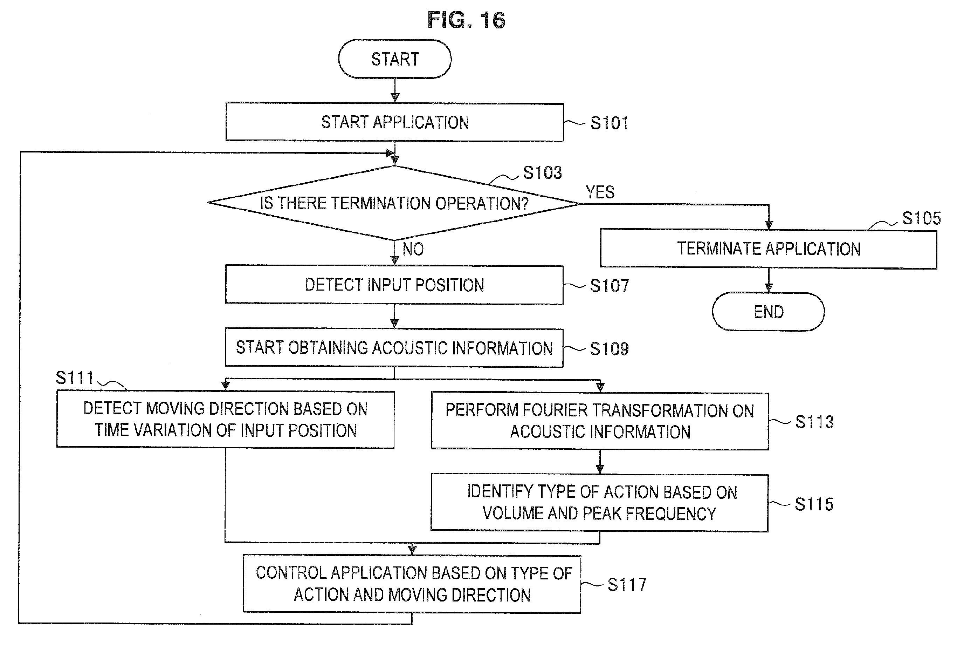

Next, the information processing method performed by the information processing apparatus according to the present embodiment will be described in detail with reference to FIG. 16. FIG. 16 is a flow diagram for illustrating the information processing method according to the present embodiment.

First, a user of the information processing apparatus 10 uses the operation object 12 such as a finger and a stylus to operate the touch panel 101 and select an object such as an icon associated with an application that the user wishes to execute. Thereby, the application control unit 161 of the information processing apparatus 10 activates the application associated with the selected object (step S101).

Subsequently, the information processing apparatus 10 waits for input by the user, and determines whether a termination operation for terminating an application is input or not (step S103). When the termination operation for terminating the application is input, the application control unit 161 of the information processing apparatus 10 terminates the running application (step S105). When the termination operation for terminating the application is not input, the information processing apparatus 10 further waits for input by the user.

When the user touches the touch panel 101 by operating the operation object 12, the input position detection unit 151 of the touch panel detects the position at which the operation object 12 is in contact with the touch panel 101 (step S107). The input position detection unit 151 transmits, as input position information, the coordinate value related to the contacting position to the moving direction detection unit 153, the application control unit 161, and the display control unit 163. In addition, the input position detection unit 151 notifies the acoustic information acquisition unit 155 that operation is performed using the operation object 12. When the acoustic information acquisition unit 155 receives from the input position detection unit 151 the information indicating that operation is performed using the operation object 12, the acoustic information acquisition unit 155 activates the vibration sensor (microphone), to start obtaining acoustic information (step S109). The acoustic information acquisition unit 155 transmits the obtained acoustic information to the Fourier transformation unit 157.

Here, the moving direction detection unit 153 detects the moving direction of the operation object 12 based on time variation of the coordinate value of the input position transmitted from the input position detection unit 151 (step S111), and transmits the moving direction to the application control unit 161.

On the other hand, the Fourier transformation unit 157 performs Fourier transformation on the acoustic information transmitted from the acoustic information acquisition unit 155 (step S113), and generates acoustic information in a frequency domain. Thereafter, the Fourier transformation unit 157 transmits the acoustic information in the frequency domain to the operation object type identification unit 159.

The operation object type identification unit 159 references the acoustic information in the frequency domain transmitted from the Fourier transformation unit 157, and identifies the type of the operation object according to the above-described method based on the volume and the peak frequency (step S115). When the type of the operation object is identified, the operation object type identification unit 159 transmits type information representing the type of the operation object to the application control unit 161.

When information about the moving direction of the operation object is received from the moving direction detection unit 153 and the operation object type information is also received from the operation object type identification unit 159, the application control unit 161 controls the application based on the above information (step S117).

When the above processing is terminated, the information processing apparatus 10 returns back to step S103 to wait for operation by the user.

As hereinabove described, the information processing method according to the present embodiment identifies the type of the operation object 12 based on the sound caused by the operation on the touch panel, and controls the application according to the identification result about the type of the operation object 12. Accordingly, the user of the information processing apparatus 10 has only to care which section of the operation object is used for performing operation, and can easily switch the function of the application.

### (Summary)

As hereinabove described, in the information processing apparatus and the information processing method according to the embodiment of the present invention, the type of the operation object is identified based on vibration caused by operation on the touch panel (including vibration of the touch panel itself and sound caused by the operation), and the application is controlled using the identified type of the operation object. Accordingly, the user of the information processing apparatus has only to care which section of the operation object is used for performing operation, and the convenience of the user is greatly improved.

Further, the information processing method according to the embodiment of the present invention can be applied to an apparatus having a small touch panel, because the type of the operation object is identified based on vibration caused by operation, and accordingly the function of the application is switched. And the apparatus may not be equipped with any display.

Further, in the information processing apparatus according to the embodiment of the present invention, the type of the operation object is identified based on vibration caused by operation, and accordingly the function of the application is switched. Thereby, the user of the information processing apparatus can control the apparatus even if the user performs operation with only one finger.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The following numbered clauses describe matter that may be combined with the claims.
Clause 1. An apparatus, comprising a touch panel; and a vibration sensor that senses a type of action used to operate the touch panel.
Clause 2. The apparatus of clause 1, wherein the vibration sensor senses a vibration caused by an object contacting the touch panel.
Clause 3. The apparatus of clause 1, wherein the vibration sensor is positioned within the apparatus below the touch panel.
Clause 4. A method, comprising sensing a type of action used to operate a touch panel using a vibration sensor.
Clause 5. The method of clause 4, wherein the vibration sensor senses a vibration caused by an object contacting the touch panel.

## Claims

1. An apparatus, comprising:
a touch panel; and
a sensor separate from the touch panel that senses a type of action used to operate the touch panel.

2. The apparatus of claim 1, wherein the sensor comprises a vibration sensor.

3. The apparatus of claim 2, wherein the vibration sensor senses a vibration caused by an object contacting the touch panel.

4. The apparatus of claim 2, wherein the vibration sensor is positioned within the apparatus below the touch panel.

5. The apparatus of claim 1, further comprising:
a processor that receives a signal from the sensor and determines a type of operation to perform based on the signal.

6. The apparatus of claim 5, wherein the signal is a first signal and the sensor is a first vibration sensor, the apparatus further comprising:
a second vibration sensor that produces a second signal,
wherein the processor removes a noise component from the first signal based on the second signal.

7. The apparatus of claim 5, wherein the sensor is a vibration sensor, and wherein the processor determines the type of operation to perform based on a type of vibration sensed by the vibration sensor.

8. The apparatus of claim 7, wherein the processor determines the type of operation to perform based on a frequency component of the signal.

9. The apparatus of claim 8, wherein the processor determines the type of operation to perform by performing a Fourier transform on the signal and analyzing a result of the Fourier transform.

10. The apparatus of claim 5, wherein the processor performs different operations based on the type of action used to operate the touch panel.

11. The apparatus of claim 10, wherein the processor performs a first type of operation when a first portion of an object contacts the touch panel and performs a second operation when a second portion of an object contacts the touch panel.

12. The apparatus of claim 11, wherein the processor performs a first type of operation when a first portion of a finger contacts the touch panel and performs a second operation when a second portion of a finger contacts the touch panel.

13. The apparatus of claim 1, further comprising a display in a region of the touch panel.

14. A method, comprising:
sensing a type of action used to operate a touch panel, using a sensor that is separate from the touch panel.

15. The method of claim 14, wherein the type of action used to operate the touch panel is sensed using a vibration sensor.
